# EUROPEAN PATENT APPLICATION

(11) **EP 0 999 095 A2**
(43) Date of publication of application: **10.05.2000**
(21) Application number: 99121599.7
(22) Date of filing: 29.10.1999
(51) Int. Cl.: B60Q 3/02

(54) **Emergency egress lighting system**

(30) Priority: 02.11.1998 US 184348
(71) Applicant: Litton Systems, Inc., Watertown Connecticut 06795-0500 (US)
(72) Inventor: Bernardini, Allen J., Southbury, Connecticut 96488 (US)
(74) Representative: MÜLLER & HOFFMANN Patentanwälte

(57) **Abstract**

An emergency lighting system for a vehicle having at least one exit is disclosed. The lighting system includes a light source. At least one flexible optical fiber is coupled to the light source and extends in a direction towards the at least one exit so as to provide an escape route for occupants of the vehicle in the event of an emergency situation. A switch activates the light source. The switch is one of an automatic switch having a sensor that detects when the vehicle is in the emergency situation and a manual switch.

## Description

### Field of the Invention

The present invention relates to a lighting apparatus, and more particularly, to an emergency egress lighting system.

### Background of the Invention

There is a need for a lighting system to guide occupants of a vehicle such as an amphibious landing vehicle to an escape hatch, in the event that the normal vehicular lighting system is disabled and/or the vehicle begins to sink. The difficulty with known lighting systems is that amphibious landing vehicles have hatches and confined passageways which cause problems in routing the normal vehicular lighting system.

Emergency exit lighting systems are known. For example, emergency lighting systems used on commercial aircraft provide aisle path lighting. The disadvantage of the commercial aircraft emergency aisle path light systems are that the emergency exit lighting systems require multiple light sources which run through the aisle of the aircraft.

### Summary of the Invention

It is, therefore, an object of the present invention to provide an emergency egress lighting system in which can be routed through tortuous pathways.

It is another object of the present invention to provide an emergency egress lighting system in which a single light source can be used.

It a further object of the present invention to provide an emergency exit lighting system that is automatically activated when an emergency situation is detected or when the normal lighting system is disabled.

These and other objects of the present invention are achieved by an emergency egress lighting system according to the present invention. The emergency egress lighting system can be mounted in a vehicle such as a military vehicle such as a tank or amphibious landing vehicle or a ship or airplane or any type of vehicle in which emergency egress is required. Many times such vehicles may have multiple escape routes, but such multiple routes actually impede rapid escape because of the confusion caused, and it may be preferable to route the occupants to a specific exit. The emergency lighting system allows occupants of the vehicle to use an escape hatch in the event that the normal vehicular lighting system is disabled and/or the vehicle begins to sink. The lighting system is preferably low voltage, self-contained (should not run off of vehicular power supply) and is light weight The lighting system can use chemical lighting, salt water activated lighting, reserve battery or biochemical/bioluminescent lighting. Advantageously, the present invention operates using a sealed, battery operated light source which is charged by a vehicular power source to illuminate one or more solid core, plastic optical fibers which are illuminated along their entire length in which light can escape through the outer diameter surface of the optical fiber to identify one or more emergency exit routes or other locations to which occupants are directed. A mirrored cap can be located at a fiber end to reflect light back into the fiber to increase light output from the fiber. The battery is charged using a manual or automatic switching arrangement The manual or automatic switching arrangement is used to activate the emergency egress lighting system. When the emergency egress lighting system is activated, the switching arrangement is switched so that the vehicular power systems does not charge the battery.

The foregoing objects are also achieved by an emergency lighting system for occupants to escape through at least one exit. The lighting system includes a light source. At least one flexible optical fiber is coupled to the light source and extends in a direction towards the at least one exit so as to provide an escape route for occupants in the event of an emergency situation. A switch activates the light source.

The foregoing objects are also achieved by an emergency lighting system for a vehicle having at least one exit. The lighting system includes a light source. At least one flexible optical fiber is coupled to the light source and extends in a direction towards the at least one exit so as to provide an escape route for occupants of the vehicle in the event of an emergency situation. A switch activates the light source. The switch is one of an automatic switch having a sensor that detects when the vehicle is in the emergency situation and a manual switch.

The present invention is not limited to use in a vehicle, but can also be used in any environment where emergency egress is required. Examples of such environments include a mine shalt or movie theatre which may become filled with smoke.

Still other objects and advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description thereof are to be regarded as illustrative in nature, and not as restrictive.

### Brief Description of the Drawings

The present invention is illustrated by way of example, and not by limitation, in the figures of the accompanying drawings, wherein elements having the same reference numeral designations represent like elements throughout and wherein:

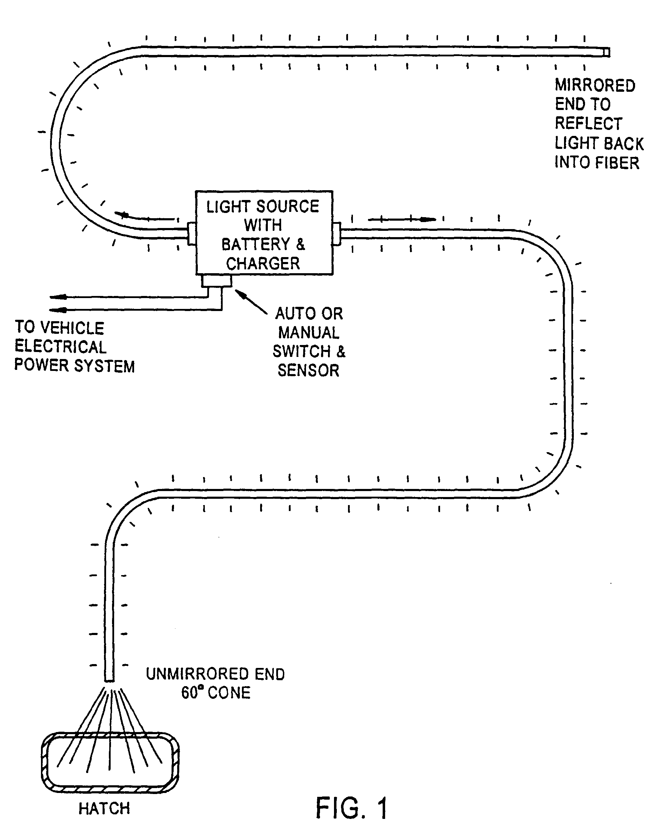

Figure 1 is an illustration of a lighting assembly according to the present invention.

### Best Mode for Carrying Out the Invention

Referring to Figure 1, there is depicted a lighting system, generally indicated at 10, which is constructed in accordance with the principles of the present invention. The emergency egress lighting system according to the present invention would be a back-up lighting system used when the normal vehicular lighting system is disabled and/or in emergency situations. The vehicle has hatches and some confined passageways. The lighting system 10 is preferably low-voltage and self-contained (should not run off of vehicular power supplies except while the battery 12 is being recharged), and lightweight. For convenience, the invention will be described in relation to the orientation depicted in Figure 1, and consequently, terms such as "above", "below", "left" and "right" as used herein should be construed in the relative sense.

As depicted in Figure 1, the lighting system 10 includes a light source with battery and charger 12, an auto or manual switch and sensor 14, a conventional vehicle electrical power system 16, a first solid core, plastic optical fiber 18, a second optical solid core, plastic optical fiber 20, and a mirrored end 22. The vehicle includes a hatch 24. The self-enclosed, battery-operated light source 12 illuminates the continuous run of side emitting, solid core large plastic fibers 18, 20. The fibers 18, 20 can be attached to the floor, ceiling and walls of the vehicle and due to the flexibility of the fibers 18, 20, the fibers can easily each be snaked around corners and through apertures.

The color of the light emitted from the light source 12 can be controlled by using interchangeable filters to emit any desired color such as a red or green light. The lighting system 10 can be mounted in any type of emergency vehicle or military vehicle. The types of vehicles for which the present invention is envisioned include tanks, airplanes, navy ships and amphibious landing vehicles and other types of vehicles for which emergency egress lighting is required. Preferably, the lighting provided by the lighting system 10 will last between three to five minutes and be of luminance sufficient for emergency egress by occupants within the vehicle when used for emergency egress lighting situations, for example, with amphibious landing vehicles. The battery can supply power for extended periods of time in other lighting situations in which emergency egress is not necessary. Advantageously, the arrangement of the present invention permits a single source of light to illuminate optical fibers 18, 20, although additional sources of light can be used.

The light source with battery and charger 12 is sealed from the environment. The light source 12 is electrically connected to the vehicle electrical power system 16 via electrical cables. The emergency egress lighting system 10 can be wired to the vehicular power system to keep the battery fully charged. In the event of vehicular disablement, automatic or normal switching can activate the egress lighting system 10 while automatically disconnecting it from the vehicular power system. The light source 12 is connected to the vehicle electrical power system through an automatic or manual switch and sensor 14. The switch and sensor 14 is used to activate the lighting system 10. The sensor can be a specialized sensor for detecting flooding, sinking and smoke as exemplary emergency conditions. The automatic or manual switch and sensor 14 is also used to determine when to charge the battery and when to activate the light source. The light source 12 can be activated manually using switch 14 or it can be activated automatically based upon the vehicle needing to be evacuated, for example, such as when a tank or amphibious vehicle begins to sink. Another situation in which the lighting system 10 would be activated using the automatic switch and sensor 14 would be when the normal vehicular lighting system is disabled or when smoke is detected in the vehicle. The battery associated with light source 12 should be of sufficient capacity to enable the emergency egress lighting system 10 to provide preferably three to five minutes of minimal lighting so that the occupants can find their way out of the vehicle. As the emergency egress lighting system is completely sealed and impervious to water, the light source 12 will remain activated until the battery is drained, thus allowing more than ample time for the occupants to escape. The light emitted at hatch 24 is preferably of a sufficient level to identify the location of the hatch 24 and facilitate egress from the vehicle. The light source 12 is preferably electrically powered, but also can be chemical, salt water activated, reserve battery or biochemical/bioluminescent lighting.

The first optical fiber 18 has a first end 30 connected to the light source 12 and a distal second end 32. The second end 32 terminates and is connected to a mirror 22 which reflects light back into the optical fiber 18.

It should be noted that optical fibers 18 and 20 are preferably plastic solid core fibers which are flexible and can be routed through tortuous pathways. The optical fibers 18 and 20 can be of any known variety so long as the optical fibers are flexible. Although only two optical fibers 18, 20 are depicted in Figure 1, it should be appreciated that any number of optical fibers can be connected to light source 12 to illuminate the interior space of the vehicle.

The second optical fiber 20 is connected to the light source 12 at first end 40 and has a distal second end 42 at an opposite end thereof. The second end 42 is unmirrored and can have a flat end to spotlight a feature such as an escape hatch. The second end can also be a lens, a diffuser, holographic or otherwise, to shape the lighting exiting the fiber. The end 42 of the fiber is preferably unmirrored in order to spot light a feature (i.e., the escape hatch 24). Unmirrored second end 42 is sufficiently close to the hatch 24. Second end 42 can be mirrored.

The lighting system 10 can have a single light source 12 with multiple optical cable runs, or a single run with multiple light sources (for redundancy) or any combination thereof. Light source 12 can be located anywhere along the optical cable runs. Further, it should be appreciated that the disclosed arrangement is exemplary and other configurations are considered to fall within the scope of the invention. The emitted light can be red or blue for night vision goggle compatibility. As the required light level is very low, it is possible to use a visible LED (light emitting diode) instead of an incandescent or metal halide bulb as light source 12. This will keep energy consumption and heat generation low.

It should be appreciated that a lighting system advantageously uses a single light source 12 to illuminate multiple optical fiber; thus, permitting egress by vehicle occupants during an emergency situation such as a vehicle sinking or the vehicle becoming disabled.

It will be readily seen by one of ordinary skill in the art that the present invention fulfills all of the objects set forth above. After reading the foregoing specification, one of ordinary skill will be able to effect various changes, substitutions of equivalents and various other aspects of the invention as broadly disclosed herein. It is therefore intended that the protection granted hereon be limited only by the definition contained in the appended claims and equivalents thereof.

## Claims

1. An emergency lighting system for occupants to escape through at least one exit, comprising:
a light source;
at least one flexible optical fiber coupled to said light source and extending in a direction towards the at least one exit so as to provide an escape route for occupants in the event of an emergency situation; and
a switch to activate said light source.

2. The emergency lighting system of claim 1, wherein said light source is one of a light emitting diode, an incandescent bulb and a metal halide bulb.

3. The emergency lighting system of claim 1, further comprising an electrical power source for powering said light source.

4. The emergency lighting system of claim 1, wherein said switch is one of an automatic switch having a sensor that detects when there is an emergency situation and a manual switch.

5. The emergency lighting system of claim 3, wherein said electrical power source is charged by a vehicle electrical power system and wherein said electrical power source is a battery.

6. The emergency lighting system of claim 3, wherein said electrical power source is capable of providing power to said light source for approximately three to five minutes.

7. The emergency lighting system of claim 1, wherein said at least one optical fiber is side emitting.

8. The emergency lighting system of claim 1, wherein a distal end of one of said at least one optical fiber is located proximate the at least one exit.

9. The emergency lighting system of claim 1, wherein said at least one flexible optical fiber is a solid core, plastic optical fiber.

10. The emergency lighting system of claim 4, wherein said sensor includes a voltage level sensor for determining when to charge a battery used for powering said light source.

11. The emergency lighting system of claim 4, wherein the emergency situation includes when a vehicle begins to sink or when a normal vehicular lighting system is disabled.

12. The emergency lighting system of claim 3, wherein the electrical power source is one of chemical, salt water activated, reserve battery, ballast powered and biochemical/bioluminescent power.

13. The emergency lighting system of claim 1, further comprising a reflector at a distal end of one of said at least one optical fiber.

14. An emergency lighting system for a vehicle having at least one exit, comprising:
a light source;
at least one flexible optical fiber coupled to said light source and extending in a direction towards the at least one exit so as to provide an escape route for occupants of the vehicle in the event of an emergency situation; and
a switch to activate said light source,
wherein said switch is one of an automatic switch having a sensor that detects when the vehicle is in the emergency situation and a manual switch.

15. The emergency lighting system of claim 14, further comprising an electrical power source for powering said light source.

16. The emergency lighting system of claim 15, wherein said electrical power source is charged by a vehicle electrical power system and wherein said battery is self-contained.

17. The emergency lighting system of claim 15, wherein said electrical power source is capable of providing power to said light source for approximately three to five minutes.

18. The emergency lighting system of claim 14, wherein said at least one optical fiber is side emitting.

19. The emergency lighting system of claim 14, wherein said at least one flexible optical fiber is a solid core, plastic optical fiber.

20. The emergency lighting system of claim 14, wherein said sensor includes a voltage level sensor for determining when to charge a battery used for powering said light source.
